# EUROPÄISCHE PATENTSCHRIFT

(11) **EP 0 966 771 B1**
(45) Veröffentlichungstag und Bekanntmachung des Hinweises auf die Patenterteilung: **05.06.2002**
(21) Anmeldenummer: 98919062.4
(22) Anmeldetag: 09.03.1998
(51) Int. Cl.: H01M 8/02

(54) **WERKSTOFF FÜR ELEKTRISCHE KONTAKTSCHICHTEN ZWISCHEN EINER ELEKTRODE EINER HOCHTEMPERATUR-BRENNSTOFFZELLE UND EINEM INTERKONNEKTOR**
MATERIAL FOR ELECTRIC CONTACT LAYERS BETWEEN A HIGH-TEMPERATURE FUEL CELL ELECTRODE AND AN INTERCONNECTOR
MATERIAU POUR COUCHES DE CONTACT ELECTRIQUES PLACEES ENTRE UNE ELECTRODE D'UNE PILE A COMBUSTIBLE HAUTE TEMPERATURE ET UN INTERCONNECTEUR

(30) Priorität: 13.03.1997 DE 19710345
(43) Veröffentlichungstag der Anmeldung: 29.12.1999
(73) Patentinhaber: FORSCHUNGSZENTRUM JÜLICH GMBH, 52425 Jülich (DE)
(72) Erfinder: DIEKMANN, Uwe, D-52072 Aachen (DE); BLASS, Günter, D-52249 Eschweiler (DE)
(74) Vertreter: Niederkofler, Oswald A., Dipl.-Phys.
(86) Internationale Anmeldenummer: DE9800688
(87) Internationale Veröffentlichungsnummer: WO9840921

(56) Entgegenhaltungen:
- EP-A- 0 446 680
- EP-A- 0 556 532
- EP-A- 0 682 379
- EP-A- 0 692 836
- EP-A- 0 714 147
- US-A- 5 387 476
- CHEMICAL ABSTRACTS, vol. 117, no. 8, 24. August 1992 Columbus, Ohio, US; abstract no. 73172b, HARUFUJI ET AL: "Solid-electrolyte fuel-cell stacks" XP000375829 & JP 04 079 163 A (FUJI DENKI K.K.) 12. März 1992 -& PATENT ABSTRACTS OF JAPAN vol. 16, no. 294 (E-1225), 29. Juni 1992 & JP 04 079163 A (FUJI ELECTRIC CO), 12. März 1992
- PATENT ABSTRACTS OF JAPAN vol. 015, no. 118 (E-1048), 22. März 1991 & JP 03 008264 A (SANYO ELECTRIC CO LTD), 16. Januar 1991

## Beschreibung

Die vorliegende Erfindung betrifft einen Werkstoff für elektrische Kontaktschichten zwischen einer Elektrode einer Hochtemperatur-Brennstoffzelle und einem Interkonnektor.

In Brennstoffzellen wird die in dem Brennstoff gespeicherte chemische Energie direkt in elektrische Energie und Wärme umgewandelt. Als Brennstoffe kommen beispielsweise reiner Wasserstoff, Methanol oder Erdgas zum Einsatz, die in der Brennstoffzelle mit dem Oxidans, meist reiner oder der in Luft enthaltene Sauerstoff, reagieren. Bei dieser Reaktion wird neben elektrischem Strom und Wärme noch Wasser erzeugt, bei den kohlenstoffhaltigen Brennstoffen zudem Kohlendioxid. Brennstoff und Oxidans werden auch unter dem Begriff Betriebsmittel zusammengefaßt.

Die einzelne Brennstoffzelle weist eine Anode und eine Kathode auf, zwischen denen der Elektrolyt angeordnet ist. Der Brennstoff wird der Anodenseite, das Oxidans der Kathodenseite der Brennstoffzelle kontinuierlich zugeführt, die Reaktionsprodukte werden kontinuierlich abgeführt.

Die verschiedenen Typen von Brennstoffzellen werden gewöhnlich an Hand des verwendeten Elektrolyten eingeteilt. Bei der Festoxid-Brennstoffzelle (SOFC, Abkürzung für Solid Oxide Fuel Cell) wird eine Keramik als Elektrolyt eingesetzt. Im Gegensatz zu den meisten anderen Brennstoffzellen-Typen ist der Elektrolyt der Festoxid-Brennstoffzelle fest. Die Betriebstemperaturen der Festoxid-Brennstoffzellen liegen im Bereich von ungefähr 600 bis ungefähr 1000 °C.

Werkstoffe für die Komponenten der Festoxid-Brennstoffzelle sind überwiegend Keramiken, deren gewünschte elektrische und elektrochemische Eigenschaften durch gezielte Kombination und Verarbeitung der Ausgangsstoffe erreicht werden. Der Elektrolyt ist beispielsweise eine gasdichte Keramikschicht aus Yttrium-stabilisiertem Zirkondioxid (abgekürzt YSZ), das bei den erwähnten Betriebstemperaturen zwischen 600 und 1000 °C eine hohe Leitfähigkeit für Sauerstoffionen besitzt. Im allgemeinen wird für die Anode ein Cermet aus Nickel und YSZ, für die Kathode ein Perowskit auf Basis von Lanthanmanganit (LaMnO₃) verwendet. Die Porosität der beiden Elektrodenschichten muß ausreichend hoch sein, damit bei Betrieb der Brennstoffzelle einerseits immer eine genügend große Gasmenge des Betriebsmittels zu der entsprechenden Grenzfläche Elektrode/Elektrolyt gelangen kann und andererseits die Reaktionsprodukte ungehindert entweichen können.

Ohne Stromfluß baut sich zwischen Anode und Kathode eine Zellspannung von ungefähr 1V auf. Da dieser Wert für den praktischen Einsatz zu gering ist, werden mehrere Einzelzellen in einem Modul zusammengefaßt und elektrisch in Reihe geschaltet. Dies erfolgt beispielsweise im Flachzellenkonzept dadurch, daß die Einzelzellen in Form von Platten hergestellt und aufeinandergestapelt werden. Zwischen jeweils zwei benachbarten Einzelzellen ist eine elektrisch leitende, Platte, der sogenannte Interkonnektor angeordnet, der die Anode der einen Einzelzelle mit der Kathode der anderen Einzelzelle elektrisch verbindet. Der Interkonnektor ist zudem gasdicht und seine beiden Hauptflächen weisen bevorzugt eine Rippenstruktur auf, so daß zu den Elektroden offene Kanäle gebildet werden. Dadurch werden zwischen Anode und Interkonnektor einerseits und zwischen Kathode und Interkonnektor andererseits voneinander getrennte Gasräume gebildet, so daß die Anode mit Brennstoff und die Kathode mit Luft versorgt werden kann, ohne daß sich die Betriebsmittel vermischen können.

Die Interkonnektoren bestehen üblicherweise aus herkömmlichen Hochtemperatur-Legierungen auf Nickelbasis oder aus Oxid-dispersionsgehärteten (oxid dispersion strengthened, abgekürzt ODS) Legierungen auf Chrombasis, wie zum Beispiel mit der Zusammensetzung 5 Gew.-% Fe, 1 Gew.-% Y₂O₃, Rest Cr (abgekürzt Cr₅Fe1Y₂O₃). Es ist auch bekannt, Interkonnektoren aus Keramiken auf Basis von Lanthanchromit (LaCrO₃) herzustellen. In der deutschen Patentanmeldung DE-196 50 704 wird zudem beschrieben, daß ein Interkonnektor aus einer Eisenlegierung mit einem Gehalt an 0 bis 0,12 Gew.-% Kohlenstoff, 17 bis 19 Gew.-% Chrom, 0 bis 1 Gew.-% Mangan, 0,7 bis 1,2 Gew.-% Aluminium und 0,7 bis 1,4 Gew.-% Silizium hergestellt ist.

Die Gasräume auf Anoden- und Kathodenseite werden nach außen dadurch abgedichtet, daß eine Abdichtungsmasse die umlaufende Fuge zwischen Brennstoffzelle und Interkonnektor ausfüllt. Die Abdichtungsmasse ist in der Regel ein Glaslot, das beispielsweise aus Alkali-Silikat-Glas mit Zusätzen von MgO und YSZ besteht.

Für eine sichere elektrische Verbindung zwischen Elektrode und Interkonnektor ist ein guter, fester Kontakt zwischen diesen erforderlich. Dieser wird im wesentlichen dadurch beeinträchtigt, daß diejenigen Oberflächen der Interkonnektoren und Elektroden, die beim Stapeln aneinandergelegt werden, uneben sind. Da zumindest die Elektroden aus keramischem Material sind, lassen sich deren Oberflächen nicht oder nur sehr aufwendig nachbearbeiten. Außerdem sind die Materialien sehr spröde, so daß wegen der hohen Bruchgefahr auch die Möglichkeit ausfällt, die Unebenheiten durch großflächiges Zusammenpressen des Stapels auszugleichen. Bisher gibt es im wesentlichen zwei Möglichkeiten, den für eine gute Kontaktierung erforderlichen Toleranzausgleich zu erreichen.

Die erste Möglichkeit besteht darin, daß die elektrische Kontaktierung der Anode mit dem Interkonnektor mit Hilfe eines Netzes aus Nickel erfolgt, das zwischen Interkonnektor und Anode angeordnet ist. Falls der Interkonnektor metallisch ist, wird das Netz vorteilhafterweise durch Punktschweißen an dem Interkonnektor befestigt, wie zum Beispiel auf dessen Rippen, falls vorhanden. Da eine Befestigung des Netzes auf der Anode nicht möglich ist, wird der ganze Stapel aus Brennstoffzellen und Interkonnektoren großflächig zusammengedrückt. Um die Unebenheiten besser ausgleichen zu können, sind die einzelnen Drähte des Netzes quer zur Netzebene wellen- oder zickzackförmig vorgeformt.

Nachteilig ist zum einen die ständig erforderliche Anpresskraft, die den konstruktiven Aufwand vergrößert und zu einem erhöhten Platzbedarf des Brennstoffzellen-Stapels führt.

Außerdem sind die Betriebstemperaturen des Brennstoffzellen-Stapels so hoch, daß das Metall des Netzes kriecht, wodurch die elektrische Kontaktierung mit der Zeit schlechter wird.

Ein weiterer Nachteil besteht darin, daß das Nickelnetz nicht für die elektrische Kontaktierung der Kathode geeignet ist, da der im Kathodengasraum vorhandene Sauerstoff auch mit dem Netz in Berührung kommt und das Metall in kurzer Zeit vollständig oxidiert. Das Nickeloxid weist aber eine sehr geringe elektrische Leitfähigkeit auf und ist daher für die elektrische Kontaktierung ungeeignet.

Die EP 0 446 680 A1 offenbart einen Stromkollektor, der aus einer Vielzahl von federnden Elementen in Form von wellenförmigen Bändern aus einer wenigstens 15 Gew.-% Cr und wenigstens 4 Gew.-% Al enthaltenden Eisenbasis- oder Nickelbasislegierung besteht. Die federnden Elemente sind an ihren Kontaktflächen, an denen sie an der Einzelzelle anliegen, (also den Wellenscheiteln) mit elektrischen Kontaktstellen versehen. Die elektrischen Kontaktstellen liegen in Form von leicht gewölbten, kugelkalottenähnlichen Tropfen oder Flecken aus Pt oder Pd oder einer Pt- oder Pd-Legierung vor, die fest auf dem Grundmaterial des federnden Elements haften. Die Kontaktstellen werden dadurch hergestellt, daß zunächst eine dünnflüssige Edelmetallpaste mit einem Pinsel auf die Wellenscheitel aufgetragen wird. Die Edelmetallpaste besteht aus dem entsprechenden Edelmetall in Pulverform, aus Bor/Blei-Silikatglas als Sinteradditiv und aus einer organischen Harzlösung als Binder. Als nächstes wird der so behandelte Stromkollektor auf 400 °C aufgeheizt und bei dieser Temperatur für 1/2 h gehalten. Während dieser Phase werden alle flüchtigen Bestandteile der Edelmetallpaste ausgetrieben und die organischen Bestandteile zersetzt. Anschließend wird der Stromkollektor auf 950 °C aufgeheizt und bei dieser Temperatur für 2 h gehalten. Während dieser Phase backen die Edelmetallkörner und die Glasfritte zu einem porösen, gerüstartigen Sinterkörper zusammen, der fest mit dem Grundkörper der wellenförmigen Bänder verbunden ist. Es wird als wesentlich angesehen, daß der gerüstartige Sinterkörper genügend metallische Brücken bildende Partien aufweist.

Die zweite Möglichkeit der elektrischen Kontaktierung der Elektroden mit dem Interkonnektor, die auch für die Kathode geeignet ist, besteht darin, daß an den gewünschten Kontaktstellen jeweils eine Kontaktschicht zwischen dem Interkonnektor und der Elektrode vorgesehen ist. Es ist bekannt, für die Kontaktschichten die Werkstoffe der jeweiligen Elektroden zu verwenden, also beispielsweise ein Ni-YSZ-Cermet für den Anodengasraum und ein Perowskit auf Basis von Lanthanmanganit oder Lanthankobaltit (LaCoO3) für den Kathodengasraum. Die Kontaktschichten werden als Paste, in der neben einem Binder die Ausgangsstoffe für die entsprechende Kontaktschicht enthalten sind, auf die gewünschten Kontaktstellen aufgebracht. Diese Paste sorgt beim Zusammensetzen des Brennstoffzellen-Stapels für den nötigen Toleranzsausgleich und erstarrt beim thermischen Fügen des Stapels.

Ein Nachteil dieser Kontaktschichten besteht darin, daß die Sintertemperatur der Werkstoffe über 1000 °C liegt. Diese Temperaturen sind jedoch insbesondere für die Interkonnektoren aus den oben erwähnten Legierungen und die Abdichtungsmasse zu hoch, so daß die Sinterung bei niedrigerer Temperatur erfolgen muß. Dann ist aber das Sinterverhalten der Werkstoffe unzulänglich, so daß keine ausreichend feste Haftung der Kontaktschicht an Elektrode und Interkonnektor erzielt werden kann.

Die US 5 387 476 A offenbart eine elektrische Zwischenschicht, die in einer ersten Alternative aus elektrisch leitfähigem Glas hergestellt ist, das Alkalien oder Erdalkalien in einem Anteil von 1 bis 20 Gew.-% sowie wenigstens ein Metalloxid mit mehreren Wertigkeitsstufen in einem Anteil von 10 bis 85 Gew.-% enthält; als Beispiel wird Natriumsilikatglas mit 40 Vol.-% Eisen(III)-oxid angeführt. In der zweiten Alternative besteht die Zwischenschicht aus einem überwiegend oxidischen Material mit elektrischer Leitfähigkeit oder aus einer Mischung, die aus dem Glas der ersten Alternative und einem überwiegend oxidischen Material mit elektrischer Leitfähigkeit besteht und Kationen aufweist, die ihre Leitfähigkeit erhöhen. Diese Zwischenschicht ist Teil eines Verbindungselementes, das außerdem noch eine keramische Stapelendplatte, die aus strontiumdotiertem Lanthanchromit besteht, und eine Stromsammlerplatte umfasst, und sie ist zwischen der Stapelendplatte und der Stromsammlerplatte angeordnet. Es wird beschrieben, dass dieses Verbindungselement innerhalb eines Stapels aus Festoxid-Brennstoffzellen als bipolare Platte (andere Bezeichnung für Interkonnektor) verwendet werden kann. Offenbart wird zudem eine Zusatzschicht, die das Verbindungselement mit der letzten Brennstoffzelle des Brennstoffzellenstapels verbindet und aus einem elektrisch leitfähigen Oxid besteht.

Es ist daher Aufgabe der Erfindung, einen Werkstoff der eingangs genannten Art zu schaffen, der die mit den bekannten Werkstoffen verbundenen Nachteile überwindet.

Diese Aufgabe wird gemäß einer ersten Alternative durch einen Verbundwerkstoff mit wenigstens zwei Phasen gelöst, von denen eine erste Phase aus Glas oder Glaskeramik besteht und eine zweite Phase elektrische Leitfähigkeit aufweist und aus Silber und/oder einem Oxid dieses Metalls und/oder einer Legierung auf Basis dieses Metalls besteht.

Diese Aufgabe wird gemäß einer zweiten Alternative durch einen Verbundwerkstoff mit wenigstens zwei Phasen gelöst, von denen eine erste Phase aus Glas oder Glaskeramik besteht und eine zweite Phase elektrische Leitfähigkeit aufweist und aus Nickel und/oder einem Oxid dieses Metalls und/oder einer Legierung auf Basis dieses Metalls besteht.

Diese Aufgabe wird gemäß einer dritten Alternative durch einen Verbundwerkstoff mit wenigstens zwei Phasen gelöst, von denen eine erste Phase aus Glas oder Glaskeramik besteht und eine zweite Phase elektrische Leitfähigkeit aufweist und aus einer Oxidkeramik besteht.

Bei der ersten und zweiten Alternative weist die zweite Phase eine metallische Leitfähigkeit auf, bei der dritten Alternative weist sie eine oxidische Leitfähigkeit auf.

Silber hat den Vorteil, daß dessen Leitfähigkeit hervorragend ist. Da zudem Silber bei tiefen Betriebstemperaturen bis ungefähr 750 °C in beiden Gasräumen beständig ist, kann in diesem Fall für beide Seiten derselbe Werkstoff verwendet werden.

Nickel hat den Vorteil, daß es preiswerter als Silber und auch bei Betriebstemperaturen über 750 °C im Anodengasraum ausreichend beständig ist.

Die Oxidkeramik ist gut für die Kathodenseite geeignet, da sie auch bei höheren Betriebstemperaturen beständig ist und kein Abdampfen von Metalloxiden auftritt.

Die in dem erfindungsgemäßen Werkstoff vorhandene erste Phase aus Glas oder Glaskeramik ist bei Temperaturen weit unter 1000 °C herstellbar. Ihr bei diesen Temperaturen vorhandenes Fließ-, Sinter- und Kristallisationsverhalten sichert eine gute Haftung des Verbundwerkstoffs an Elektroden und Interkonnektoren.

Eine ausreichende elektrische Leitfähigkeit wird durch die zweite Phase gewährleistet.

Zur Inbetriebnahme des Brennstoffzellen-Stapels muß dieser von Raumtemperatur auf Betriebstemperatur aufgeheizt werden. Diese Temperaturänderung von einigen hundert °C kann zusammen mit der für die elektrische Kontaktierung erforderlichen festen Verbindung zwischen Interkonnektoren und Einzelzellen zu mechanischen Spannungen führen, die so stark sind, daß die bruchempfindlichen keramischen Einzelzellen zerstört werden. Es ist daher äußerst wichtig, daß die verschiedenen Werkstoffe in ihrem Wärmeausdehnungsverhalten aneinander angepaßt sind.

Diese Erfordernisse lassen sich mit dem erfindungsgemäßen Werkstoff leicht erfüllen, da die erste Phase gut an das Wärmeausdehnungsverhalten von Interkonnektor und Elektroden angepaßt werden kann.

Vorteilhafte Zusammensetzungen, Anwendungen und Weiterbildungen sind in den Unteransprüchen beschrieben.

Vorzugsweise ist der erfindungsgemäße Werkstoff aus einem wenigstens zwei Pulver umfassenden Gemisch hergestellt, von denen ein erstes Pulver die Ausgangsstoffe für die erste Phase umfaßt und ein zweites Pulver bei der ersten Alternative Silber und/oder ein Oxid dieses Metalls und/oder eine Legierung auf Basis dieses Metalls umfaßt, bei der zweiten Alternative Nickel und/oder ein Oxid dieses Metalls und/oder eine Legierung auf Basis dieses Metalls umfaßt und bei der dritten Alternative eine Oxidkeramik umfaßt.

Dieses Pulvergemisch wird in technologisch geeigneter Form, wie zum Beispiel als Paste, beim Zusammensetzen des Brennstoffzellen-Stapels aus den Brennstoffzellen und den Interkonnektoren auf die gewünschten Kontaktstellen zwischen Interkonnektoren und Elektroden aufgebracht. Beim anschließenden thermischen Fügen des Stapels entsteht aus diesem Gemisch der erfindungsgemäße elektrisch leitfähige Glas- oder Glaskeramik-Verbundwerkstoff.

Bei einem vorteilhaften Beispiel für diesen Werkstoff beträgt der Anteil des ersten Pulvers zwischen 5 und 50 Vol.-% und der Anteil des zweiten Pulvers zwischen 95 und 50 Vol.-%.

Bei der dritten Alternative umfaßt die zweite Phase oder das zweite Pulver bevorzugt ein Perowskit, das auf Lanthanchromit und/oder Lanthanmanganit und/oder Lanthankobaltit basieren und zudem mit Strontium dotiert sein kann.

Mit dem erfindungsgemäßen Werkstoff läßt sich vorteilhaft ein Stapel aus wenigstens zwei Hochtemperatur-Brennstoffzellen herstellen, die jeweils eine Anode aus Cermet und eine Kathode aus Keramik aufweisen und von denen jeweils zwei benachbarte Brennstoffzellen durch einen zwischen ihnen liegenden Interkonnektor elektrisch zusammengeschaltet sind, wobei an den gewünschten Kontaktstellen zwischen Interkonnektor und Elektrode jeweils eine an diesen haftende Kontaktschicht vorgesehen ist, die aus dem erfindungsgemäßen Werkstoff besteht.

Falls bei einem derartigen Brennstoffzellen-Stapel die Anode aus Cermet, die Kathode aus Perowskit und der Interkonnektor aus Metall oder einer Legierung besteht, was besonders für Betriebstemperaturen unter 750 °C vorteilhaft ist, dann können sowohl die Kontaktschichten zwischen Anode und Interkonnektor als auch die Kontaktschichten zwischen Kathode und Interkonnektor aus dem gleichen Werkstoff gemäß der ersten Alternative bestehen.

Als Alternative, insbesondere für Betriebstemperaturen über 750 °C, können in diesem Fall die Kontaktschichten zwischen Anode und Interkonnektor aus einem Werkstoff gemäß der zweiten Alternative und die Kontaktschichten zwischen Kathode und Interkonnektor aus einem Werkstoff gemäß der dritten Alternative bestehen.

Im folgenden werden bevorzugte Einsatzgebiete der Erfindung anhand der beigefügten Zeichnungen näher beschrieben.
- FIG. 1: ist eine schematische Darstellung einer Festoxid-Brennstoffzelle;
- FIG. 2: ist ein vergrößerter Querschnitt durch eine Festoxid-Brennstoffzelle gemäß dem Substratkonzept;
- FIG. 3: ist eine perspektivische Ansicht eines Interkonnektors;
- FIG. 4: ist eine teilweise aufgebrochene perspektivische Ansicht eines Brennstoffzellen-Aggregates, der einen Stapel aus Festoxid-Brennstoffzellen gemäß dem Substratkonzept und Interkonnektoren gemäß FIG. 3 aufweist; und
- FIG. 5: ist eine entlang der Linie V-V in FIG. 4 geschnittene schematische Detailansicht des Brennstoffzellen-Stapels.

Arbeitsweise und Aufbau von Hochtemperatur-Brennstoffzellen werden nachstehend am Beispiel einer mit Wasserstoff und Luft betriebenen Festoxid-Brennstoffzelle näher beschrieben.

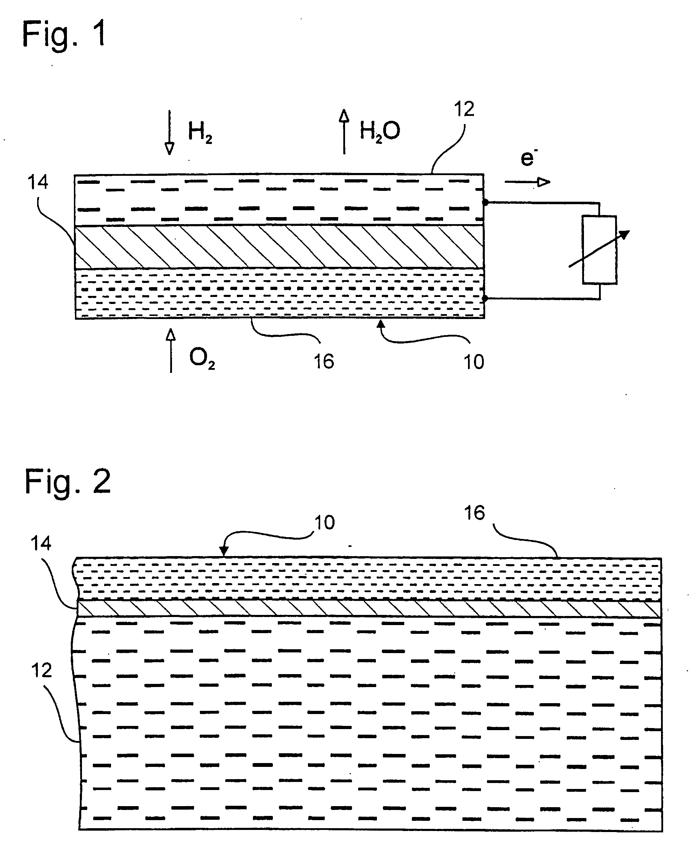

Gemäß FIG. 1 und 2 weist eine Festoxid-Brennstoffzelle 10 eine Anode 12, einen Elektrolyten 14 und eine Kathode 16 auf. Der Elektrolyt 14 ist eine gasdichte Keramikschicht aus YSZ, das aus ZrO₂ mit einem Zusatz von 8 Mol-% Y₂O₃ besteht. Die Anode 12 ist aus einem Ni-YSZ-Cermet, das aus den Ausgangsstoffen YSZ, das aus ZrO₂ mit einem Zusatz von 8 Mol-% Y₂O₃ besteht, und NiO hergestellt ist. Die Kathode 16 ist aus einem Perowskit auf Basis von Lanthanmanganit der Zusammensetzung La_{0,65}Sr_{0,30}MnO₃. Die beiden Elektrodenschichten sind gasdurchlässig, so daß bei Betrieb der Brennstoffzelle 10 der Wasserstoff zur Grenzfläche Anode/Elektrolyt und der Luftsauerstoff zur Grenzfläche Kathode/Elektrolyt jeweils in ausreichenden Mengen gelangen und andererseits das Reaktionsprodukt Wasser ungehindert entweichen können.

Die gemäß FIG. 1 an der Grenzschicht Kathode/Elektrolyt aus dem kontinuierlich zugeführten Luftsauerstoff erzeugten O²⁻-Ionen wandern durch den Elektrolyten 14 zu der Grenzschicht Anode/Elektrolyt. Dort wird der Wasserstoff oxidiert und reagiert mit den O²⁻-Ionen zu Wasser, wobei neben der Reaktionswärme auch Elektronen freigesetzt werden. Diese fließen über einen zwischen Anode 12 und Kathode 16 geschalteten Verbraucher zurück zur Kathode 16, wo sie neue O²⁻-Ionen bilden. Das an der Anode 12 entstandene Wasser liegt wegen der hohen Temperaturen als Dampf vor und wird, wie die in ihrem Sauerstoffgehalt verringerte Luft, an der Kathodenseite kontinuierlich abgeführt.

FIG. 2 zeigt den Aufbau einer Festoxid-Brennstoffzelle 10 gemäß dem Substratkonzept, bei dem die mechanische Stabilität der Einzelzelle 10 durch die Anode 12 erfolgt, die ein 2000 µm dickes Substrat ist. Auf dieses Anoden-Substrat wird die Elektrolytschicht 14 mit 20 µm Dicke und darauf die Kathodenschicht 16 mit 50 µm Dicke aufgebracht.

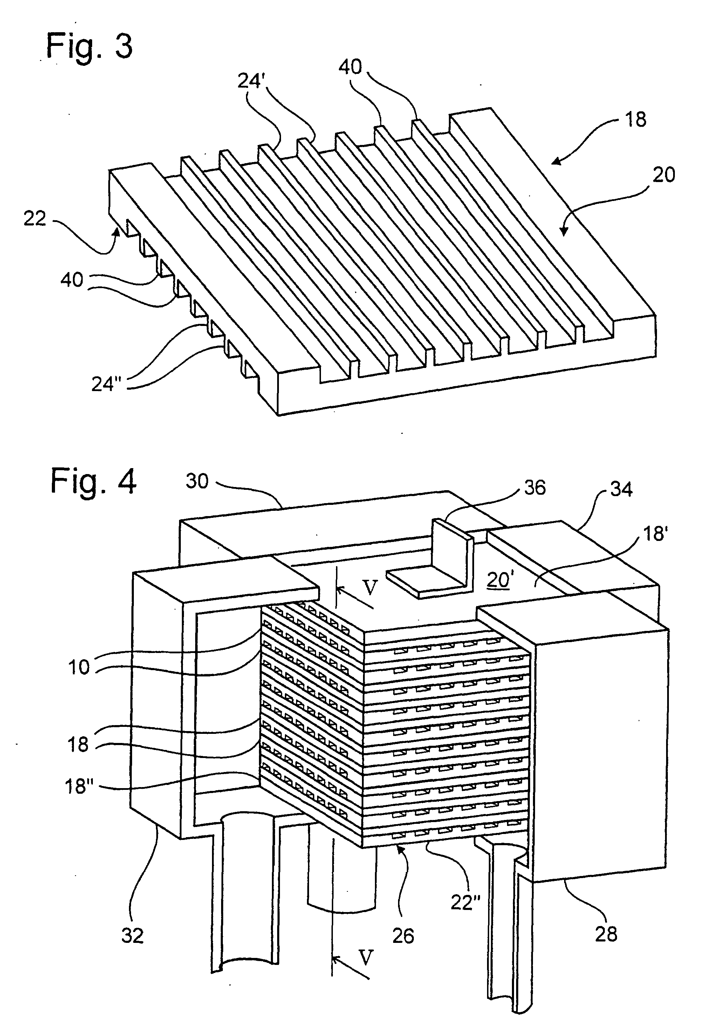

FIG. 3 zeigt einen plattenförmigen Interkonnektor 18, der aus einer Eisenlegierung mit einem Gehalt an 0 bis 0,12 Gew.-% Kohlenstoff, 17 bis 19 Gew.-% Chrom, 0 bis 1 Gew.-% Mangan, 0,7 bis 1,2 Gew.-% Aluminium und 0,7 bis 1,4 Gew.-% Silizium hergestellt ist.

Der Grundriß des Interkonnektors 18 gleicht im wesentlichen dem der Einzelzellen 10, in der vorliegenden bevorzugten Ausführungsform ist er quadratisch, kann aber auch anders aussehen. Die beiden quadratischen Hauptflächen 20, 22 des Interkonnektors 18 sind derart gerippt, daß jeweils mehrere parallele, rillenförmige Kanäle 24 durchgehend von einem Rand des Interkonnektors 18 zum gegenüberliegenden reichen. Dabei verlaufen die Kanäle 24' in der in FIG. 3 sichtbaren oberen Hauptfläche 20 rechtwinklig zu den Kanälen 24" in der gegenüberliegenden unteren Hauptfläche 22.

Das in FIG. 4 gezeigte Brennstoffzellen-Aggregat weist einen Brennstoffzellen-Stapel 26 und vier daran angebrachte Gaskästen auf. Der Brennstoffzellen-Stapel 26 umfaßt zehn Festoxid-Brennstoffzellen 10, von denen jede gemäß dem in FIG. 2 gezeigten Substratkonzept aufgebaut ist. Bei jeder Einzelzelle 10 liegt die Anode 12 oben, die Kathode 16 unten. Jeweils zwei benachbarte Einzelzellen 10 sind durch einen Interkonnektor 18 gemäß FIG. 3 einerseits räumlich voneinander getrennt, andererseits durch diesen mechanisch und elektrisch miteinander verbunden, wie weiter unten näher beschrieben wird. Auf der Anode 12 der obersten Einzelzelle 10 und unter der Kathode 16 der untersten Einzelzelle 10 liegt jeweils ebenfalls ein Interkonnektor 18', 18". Der oberste Interkonnektor 18' unterscheidet sich dadurch von den übrigen neun zwischen zwei Einzelzellen 10 liegenden Interkonnektoren 18, daß nur die an der Anode 12 anliegende untere Hauptfläche 22 die Kanäle 24" aufweist, wohingegen die obere, freie Hauptfläche 20' glatt ist. Entsprechend unterscheidet sich der unterste Interkonnektor 18" dadurch von den übrigen neun zwischen zwei Einzelzellen 10 liegenden Interkonnektoren 18, daß nur die an der Kathode 16 anliegende obere Hauptfläche 20 die Kanäle 24' aufweist, wohingegen die untere, freie Hauptfläche 22" glatt ist. Auf diese freien Hauptflächen 20', 22" ist jeweils eine Stromabnehmerfahne 36, von denen die untere nicht dargestellt ist, geschweißt, über die der in dem Brennstoffzellen-Stapel 26 erzeugte elektrische Strom abgeführt wird.

An jeder der vier Seitenflächen des Stapels 26 ist ein Gaskasten 28, 30, 32, 34 luftdicht angebracht, über die die Betriebsmittel jeweils zu- oder abgeführt werden. Der in FIG. 4 vordere Gaskasten 28 dient der Zufuhr von Luft, der hintere Gaskasten 30 der Abfuhr der im Sauerstoffgehalt verringerten Luft. Der in FIG. 4 linke Gaskasten 32 dient der Zufuhr von Wasserstoff, der rechte Gaskasten 34 der Abfuhr des Wassers und desjenigen Wasserstoffes, der nicht reagiert hat. Die Fugen zwischen den Gaskästen und dem Stapel 26 sind mit Glaslot abgedichtet.

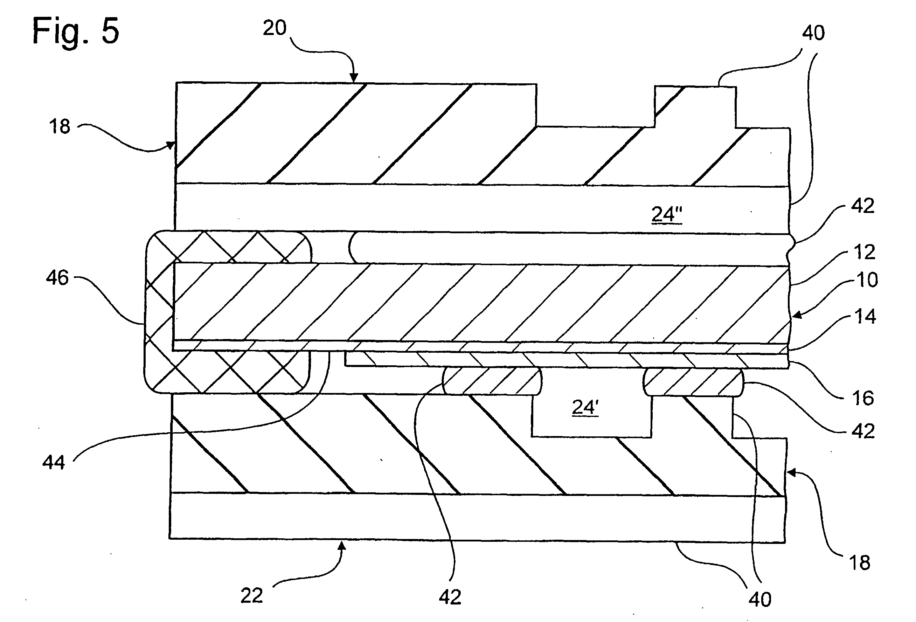

FIG. 5 ist ein Schnitt durch den Brennstoffzellen-Stapel 26 entlang der Linie V-V in FIG. 4 und zeigt in einem vergrößerten Ausschnitt, wie die Kontaktierung von Anode 12 und Kathode 16 einer Einzelzelle 10 mit dem entsprechenden Interkonnektor 18 erfolgt. Die in FIG. 5 linke Seitenfläche des Stapels 26 weist, wie auch in FIG. 4, zum Wasserstoffzufuhrkasten 32.

In FIG. 5 ist einer der von links nach rechts verlaufenden Kanäle 24" in der unteren Hauptfläche 22 des oberen Interkonnektors 18 im Längsschnitt gezeigt. Durch diesen Kanal 24" strömt von links Wasserstoff aus dem Wasserstoffzufuhrkasten 32 zur Anode 12. Weiter sind in FIG. 5 zwei der von vorn nach hinten verlaufenden Kanäle 24' in der oberen Hauptfläche 20 des unteren Interkonnektors 18 im Querschnitt dargestellt. Durch diese Kanäle 24' strömt von vorne Luft aus dem Luftzufuhrkasten 28 zur Kathode 16.

Die elektrische Verbindung der Elektroden 12, 16 mit dem Interkonnektor 18 erfolgt mit Hilfe von Kontaktschichten 42. Auf der Anodenseite sind die Kontaktschichten 42 zwischen den Stegen 40 an der unteren Hauptfläche 22 des Interkonnektors 18 und der Anode 12, auf der Kathodenseite zwischen den Stegen 40 an der oberen Hauptfläche 20 des Interkonnektors 18 und der Kathode 16 vorgesehen.

Beim Zusammensetzen des Brennstoffzellen-Stapels 26 werden die Kontaktschichten 42 als Paste auf die die Kanäle 24" begrenzenden Stege 40 an der unteren Hauptfläche 22 des Interkonnektors 18 aufgebracht, und der so behandelte Interkonnektor 18 wird dann mit dieser unteren Hauptfläche 22 auf die freie Anode 12 der obersten Einzelzelle 10 des Stapels 26 gelegt. Dann wird die Paste auf die die Kanäle 24' begrenzenden Stege 40 an der oberen Hauptfläche 20 des Interkonnektors 18 aufgebracht, und auf den so behandelten Interkonnektor 18 wird die nächste Einzelzelle 10 mit ihrer nach unten weisenden Kathode 16 gelegt.

Die Paste für die Kontaktschichten 42 setzt sich aus einem Binder als Pastengrundlage und einem Pulvergemisch zusammen. Das Volumenverhältnis zwischen Binder und Pulvergemisch beträgt beispielsweise 1:4. Als Binder kommen bekannte Stoffe wie zum Beispiel Kunstharz oder Terpineol-Zellulose in Frage. Das Pulvergemisch umfaßt einerseits ein Pulver aus den Ausgangsstoffen für Glas und andererseits pulverisiertes Silber im Volumenverhältnis 1:1, das heißt, daß die Anteile der beiden Pulver am Pulvergemisch jeweils 50 Vol.-% betragen. Anstelle des Silbers kann auch Silberoxidpulver und/oder eine Silberlegierung in Pulverform, jeweils auch zusammen mit Silberpulver, verwendet werden. Da Silber sehr edel ist, kann es für die Kontaktschichten 42 in den Kathodengasräumen verwendet werden, obwohl dort wegen der zugeführten Luft eine oxidierende Atmosphäre vorhanden ist. Es ist daher möglich, ein und dieselbe Paste für die Kontaktschichten 42 in beiden Gasräumen zu verwenden. Dadurch wird die Herstellung der Brennstoffzellen-Aggregate, insbesondere derjenigen für abgesenkte Temperaturen, erleichtert.

Für die Kontaktschichten 42 in den Anodengasräumen kann allerdings auch eine Paste verwendet werden, bei der in dem Pulvergemisch das Silber durch Nickel, das Silberoxid durch Nickeloxid und die Silberlegierung durch eine Nikkellegierung ersetzt ist. Obwohl Nickel weniger edel als Silber ist, ist diese Eigenschaft im Anodengasraum kaum von Bedeutung, da dort keine oxidierende Atmosphäre vorhanden ist. Nickel ist aber hitzebeständiger als Silber, so daß mit Kontaktschichten 42 aus dieser Paste höhere Betriebstemperaturen möglich sind. Dann sollte aber auch für die Kontaktschichten 42 in den Kathodengasräumen als elektrisch leitfähige Komponente ein Pulver aus einer elektrisch leitfähigen Oxidkeramik, wie zum Beispiel Perowskitkeramik, verwendet werden.

Vor oder während der ersten Inbetriebnahme des Brennstoffzellen-Aggregates wird der Brennstoffzellen-Stapel einer kontrollierten thermischen Behandlung unterzogen, in deren Verlauf das die Glas-Ausgangsstoffe enthaltende erste Pulver der Paste so weit geschmolzen wird, daß sich die Glasschmelze gut mit den Oberflächen von Elektroden 12, 16 und Interkonnektoren 18 verbindet. Dann wird die Temperatur so gesenkt, daß die Glasschmelze erstarrt. Der Binder verdampft während der thermischen Behandlung. Die so hergestellten Kontaktschichten 42 aus Glas-Verbundwerkstoff haften fest an den Elektroden 12, 16 und Interkonnektoren 18.

Im Rahmen der thermischen Behandlung kann das Glas nach dem Erstarren auch zur Keimbildung und anschließend zur Kristallisation gebracht werden, so daß aus dem Glas eine Glaskeramik wird. In diesem Fall ist es sinnvoll, dem ersten Pulver neben den Glas-Ausgangsstoffen noch Keimbildner beizumischen.

Eine Glaskeramikphase hat gegenüber einer Glasphase den Vorteil, daß die chemische Reaktivität wegen der teilweisen Kristallisation geringer ist. Dies ist beispielsweise im Zusammenhang mit Perowskiten, die in der Kathode 16 oder der zweiten Phase der Kontaktschicht 42 enthalten sind, von Bedeutung, da diese leicht mit Glas reagieren, was unerwünscht ist, aber in viel geringerem Maße mit Glaskeramik.

Gemäß FIG. 5 reicht die Kathodenschicht 16 nicht ganz bis zum Rand von Anode 12 und Elektrolyt 14. Vielmehr liegt die Unterseite der Elektrolytschicht 14 umlaufend frei. Dieser um den gesamten Umfang der Einzelzelle 10 umlaufende zweischichtige Randbereich 44 der Einzelzelle 10 ist von einer Abdichtungsmasse 46 umschlossen, die aus Alkali-Silikat-Glas mit Zusätzen von MgO und YSZ besteht. Diese Abdichtung verhindert, wie in FIG. 5 gut zu erkennen ist, daß sich der Wasserstoff, der in dem Wasserstoffzufuhrkasten 32 und in dem Kanal 24" über der Anode 12 vorhanden ist, mit dem Sauerstoff in den Kanälen 24' unter der Kathode 16 vermischt. Die Abdichtung haftet außerdem an den äußeren Randbereichen der Stege 40 in der oberen und unteren Hauptfläche 20, 22 der Interkonnektoren 18, so daß Interkonnektoren 18 und Einzelzellen 10 fest miteinander verbunden sind.

## Patentansprüche

1. Werkstoff für elektrische Kontaktschichten (42) zwischen einer Elektrode (12, 16) einer Hochtemperatur-Brennstoffzelle (10) und einem Interkonnektor (18), wobei der Werkstoff ein Verbundwerkstoff mit wenigstens zwei Phasen ist, von denen eine erste Phase aus Glas oder Glaskeramik besteht und eine zweite Phase elektrische Leitfähigkeit aufweist und aus Silber und/oder einem Oxid dieses Metalls und/oder einer Legierung auf Basis dieses Metalls besteht.

2. Werkstoff nach Anspruch 1, **dadurch gekennzeichnet, daß** er aus einem wenigstens zwei Pulver umfassenden Gemisch hergestellt ist, von denen ein erstes Pulver die Ausgangsstoffe für die erste Phase umfaßt und ein zweites Pulver Silber und/oder ein Oxid dieses Metalls und/oder eine Legierung auf Basis dieses Metalls umfaßt.

3. Werkstoff nach Anspruch 2, **dadurch gekennzeichnet, daß** der Anteil des ersten Pulvers zwischen 5 und 50 Vol.-% und der Anteil des zweiten Pulvers zwischen 95 und 50 Vol.-% beträgt.

4. Werkstoff für elektrische Kontaktschichten (42) zwischen einer Elektrode (12, 16) einer Hochtemperatur-Brennstoffzelle (10) und einem Interkonnektor (18), wobei der Werkstoff ein Verbundwerkstoff mit wenigstens zwei Phasen ist, von denen eine erste Phase aus Glas oder Glaskeramik besteht und eine zweite Phase elektrische Leitfähigkeit aufweist und aus Nickel und/oder einem Oxid dieses Metalls und/oder einer Legierung auf Basis dieses Metalls besteht.

5. Werkstoff nach Anspruch 4, **dadurch gekennzeichnet, daß** er aus einem wenigstens zwei Pulver umfassenden Gemisch hergestellt ist, von denen ein erstes Pulver die Ausgangsstoffe für die erste Phase umfaßt und ein zweites Pulver Nickel und/oder ein Oxid dieses Metalls und/oder eine Legierung auf Basis dieses Metalls umfaßt.

6. Werkstoff nach Anspruch 5, **dadurch gekennzeichnet, daß** der Anteil des ersten Pulvers zwischen 5 und 50 Vol.-% und der Anteil des zweiten Pulvers zwischen 95 und 50 Vol.-% beträgt.

7. Werkstoff für elektrische Kontaktschichten (42) zwischen einer Elektrode (12, 16) einer Hochtemperatur-Brennstoffzelle (10) und einem Interkonnektor (18), wobei der Werkstoff ein Verbundwerkstoff mit wenigstens zwei Phasen ist, von denen eine erste Phase aus Glas oder Glaskeramik besteht und eine zweite Phase elektrische Leitfähigkeit aufweist und aus einer Oxidkeramik besteht.

8. Werkstoff nach Anspruch 7, **dadurch gekennzeichnet, daß** er aus einem wenigstens zwei Pulver umfassenden Gemisch hergestellt ist, von denen ein erstes Pulver die Ausgangsstoffe für die erste Phase umfaßt und ein zweites Pulver eine Oxidkeramik umfaßt.

9. Werkstoff nach Anspruch 8, **dadurch gekennzeichnet, daß** der Anteil des ersten Pulvers zwischen 5 und 50 Vol.-% und der Anteil des zweiten Pulvers zwischen 95 und 50 Vol.-% beträgt.

10. Werkstoff nach einem der Ansprüche 7 bis 9, **dadurch gekennzeichnet, daß** die Oxidkeramik ein Perowskit ist.

11. Werkstoff nach Anspruch 10, **dadurch gekennzeichnet, daß** das Perowskit auf Lanthanchromit und/oder Lanthankobaltit und/oder Lanthanmanganit basiert.

12. Stapel aus wenigstens zwei Hochtemperatur-Brennstoffzellen (10), die jeweils eine Anode (12) aus Cermet und eine Kathode (16) aus Keramik aufweisen und von denen jeweils zwei benachbarte Brennstoffzellen (10) durch einen zwischen ihnen liegenden Interkonnektor (18) elektrisch zusammengeschaltet sind, wobei an den gewünschten Kontaktstellen zwischen Interkonnektor (18) und Elektrode (12, 16) jeweils eine an diesen haftende Kontaktschicht (42) vorgesehen ist, die aus einem Werkstoff nach einem der vorhergehenden Ansprüche besteht.

13. Stapel nach Anspruch 12, **dadurch gekennzeichnet, daß** die Anode (12) aus Cermet, die Kathode (16) aus Perowskit und der Interkonnektor (12, 16) aus Metall oder einer Legierung besteht, und daß sowohl die Kontaktschichten (42) zwischen Anode (12) und Interkonnektor (18) als auch die Kontaktschichten (42) zwischen Kathode (16) und Interkonnektor (18) aus dem gleichen Werkstoff nach einem der Ansprüche 1 bis 3 bestehen.

14. Stapel nach Anspruch 12, **dadurch gekennzeichnet, daß** die Anode (12) aus Cermet, die Kathode (16) aus Perowskit und der Interkonnektor (18) aus Metall oder einer Legierung besteht, und daß die Kontaktschichten (42) zwischen Anode (12) und Interkonnektor (18) aus einem Werkstoff nach einem der Ansprüche 4 bis 6 und die Kontaktschichten (42) zwischen Kathode (16) und Interkonnektor (18) aus einem Werkstoff nach einem der Ansprüche 7 bis 11 bestehen.

## Claims

1. Material for electric contact layers (42) between an electrode (12, 16) of a high-temperature fuel cell (10) and an interconnector (18), said material being a composite with at least two phases, a first phase of which consisting of glass or glass ceramics and a second phase of which having electrical conductivity and consisting of silver and/or an oxide of this metal and/or an alloy on the basis of this metal.

2. Material according to claim 1, **characterized in that** it is made of a mixture comprising at least two powders, a first powder of which comprising the starting substances for the first phase and a second powder of which comprising silver and/or an oxide of this metal and/or an alloy on the basis of this metal.

3. Material according to claim 2, **characterized in that** the portion of the first powder is between 5 and 50 % by volume and that the portion of the second powder is between 95 and 50 % by volume.

4. Material for electric contact layers (42) between an electrode (12, 16) of a high-temperature fuel cell (10) and an interconnector (18), said material being a composite with at least two phases, a first phase of which consisting of glass or glass ceramics and a second phase of which having electrical conductivity and consisting of nickel and/or an oxide of this metal and/or an alloy on the basis of this metal.

5. Material according to claim 4, **characterized in that** it is made of a mixture comprising at least two powders, a first powder of which comprising the starting substances for the first phase and a second powder of which comprising nickel and/or an oxide of this metal and/or an alloy on the basis of this metal.

6. Material according to claim 5, **characterized in that** the portion of the first powder is between 5 and 50 % by volume and that the portion of the second powder is between 95 and 50 % by volume.

7. Material for electric contact layers (42) between an electrode (12, 16) of a high-temperature fuel cell (10) and an interconnector (18), said material being a composite with at least two phases, a first phase of which consisting of glass or glass ceramics and a second phase of which having electrical conductivity and consisting of an oxide ceramic.

8. Material according to claim 7, **characterized in that** it is made of a mixture comprising at least two powders, a first powder of which comprising the starting substances for the first phase and a second powder of which comprising an oxide ceramic.

9. Material according to claim 8, **characterized in that** the portion of the first powder is between 5 and 50 % by volume and that the portion of the second powder is between 95 and 50 % by volume.

10. Material according to one of claims 7 to 9, **characterized in that** the oxide ceramic is a perovskite.

11. Material according to claim 10, **characterized in that** the perovskite is based on lanthanum chromite and/or lanthanum cobaltite and/or lanthanum manganite.

12. Stack of at least two high-temperature fuel cells (10), each of which comprising an anode (12) of cermet and a cathode (16) of ceramics, and each two adjacent fuel cells (10) being electrically connected by an interconnector (18) lying between them, a contact layer (42) being provided at each of the desired contact points between the interconnector (18) and the electrode (12, 16), said contact layer (42) adhering to the interconnector (18) and the electrode (12, 16) and consisting of a material according to one of the preceding claims.

13. Stack according to claim 12, **characterized in that** the anode (12) consists of cermet, the cathode (16) consists of perovskite and the interconnector (18) consists of metal or an alloy, and that the contact layers (42) between anode (12) and interconnector (18) as well as the contact layers (42) between cathode (16) and interconnector (18) consist of the same material according to one of claims 1 to 3.

14. Stack according to claim 12, **characterized in that** the anode (12) consists of cermet, the cathode (16) consists of perovskite and the interconnector (18) consists of metal or an alloy, and that the contact layers (42) between anode (12) and interconnector (18) consist of a material according to one of claims 4 to 6 and the contact layers (42) between cathode (16) and interconnector (18) consist of a material according to one of claims 7 to 11.

## Revendications

1. Matériau pour couches de contact (42) électriques placées entre une électrode (12, 16) d'une pile à combustible (10) haute température et un interconnecteur (18), le matériau étant un matériau composite avec au moins deux phases, de lesquelles une première phase est composée de verre ou de vitrocéramique et une deuxième phase présente conductibilité électrique et est composée d'argent et/ou d'un oxyde de ce métal et/ou d'un alliage à base de ce métal.

2. Matériau selon la revendication 1, **caractérisé en ce qu'**il est fait d'un mélange comprenant au moins deux poudres, de lesquelles une première poudre comprend les produits de départ pour la première phase et une deuxième poudre comprend de l'argent et/ou un oxyde de ce métal et/ou un alliage à base de ce métal.

3. Matériau selon la revendication 2, **caractérisé en ce que** la portion de la première poudre est entre 5 et 50 pourcent volumétrique et la portion de la deuxième poudre est entre 95 et 50 pourcent volumétrique.

4. Matériau pour couches de contact (42) électriques placées entre une électrode (12, 16) d'une pile à combustible (10) haute température et un interconnecteur (18), le matériau étant un matériau composite avec au moins deux phases, de lesquelles une première phase est composée de verre ou de vitrocéramique et une deuxième phase présente conductibilité électrique et est composée de nickel et/ou d'un oxyde de ce métal et/ou d'un alliage à base de ce métal.

5. Matériau selon la revendication 4, **caractérisé en ce qu'**il est fait d'un mélange comprenant au moins deux poudres, de lesquelles une première poudre comprend les produits de départ pour la première phase et une deuxième poudre comprend du nickel et/ou un oxyde de ce métal et/ou un alliage à base de ce métal.

6. Matériau selon la revendication 5, **caractérisé en ce que** la portion de la première poudre est entre 5 et 50 pourcent volumétrique et la portion de la deuxième poudre est entre 95 et 50 pourcent volumétrique.

7. Matériau pour couches de contact (42) électriques placées entre une électrode (12, 16) d'une pile à combustible (10) haute température et un interconnecteur (18), le matériau étant un matériau composite avec au moins deux phases, de lesquelles une première phase est composée de verre ou de vitrocéramique et une deuxième phase présente conductibilité électrique et est composée d'une céramique oxydée.

8. Matériau selon la revendication 7, **caractérisé en ce qu'**il est fait d'un mélange comprenant au moins deux poudres, de lesquelles une première poudre comprend les produits de départ pour la première phase et une deuxième poudre comprend une céramique oxydée.

9. Matériau selon la revendication 8, **caractérisé en ce que** la portion de la première poudre est entre 5 et 50 pourcent volumétrique et la portion de la deuxième poudre est entre 95 et 50 pourcent volumétrique.

10. Matériau selon l'une des revendications 7 à 9, **caractérisé en ce que** la céramique oxydée est une perovskite.

11. Matériau selon la revendication 10, **caractérisé en ce que** la perovskite est basée sur chromite de lanthane et/ou cobaltite de lanthane et/ou manganite de lanthane.

12. Tas de au moins deux piles à combustible (10) haute température, de lesquelles chacune présente une anode (12) de cermet et une cathode (16) de céramique et de lesquelles chaque deux piles à combustible (10) adjacentes sont interconnectées électriquement par un interconnecteur (18) couché entre eux, une couche de contact (42) étant prévue à chacune des points de contact désirées entre interconnecteur (18) et électrode (12, 16), cette couche de contact (42) adhérant à l'interconnecteur (18) et à la électrode (12, 16) et étant composée d'un matériau selon l'une des revendications précédentes.

13. Tas selon la revendication 12, **caractérisé en ce que** la anode (12) se compose de cermet, la cathode (16) se compose de perovskite et l'interconnecteur (18) se compose de métal ou d'un alliage, et que aussi bien les couches de contact (42) placées entre anode (12) et interconnecteur (18) que les couches de contact (42) placées entre cathode (16) et interconnecteur (18) sont composées du même matériau selon l'une des revendications 1 à 3.

14. Tas selon la revendication 12, **caractérisé en ce que** la anode (12) se compose de cermet, la cathode (16) se compose de perovskite et l'interconnecteur (18) se compose de métal ou d'un alliage, et que les couches de contact (42) placées entre anode (12) et interconnecteur (18) sont composées d'un matériau selon l'une des revendications 4 à 6 et les couches de contact (42) placées entre cathode (16) et interconnecteur (18) sont composées d'un matériau selon l'une des revendications 7 à 11.
